# EUROPEAN PATENT APPLICATION

(11) **EP 4 692 745 A1**
(43) Date of publication of application: **11.02.2026**
(21) Application number: 24778809.4
(22) Date of filing: 16.02.2024
(51) Int. Cl.: G01L 3/10

(54) **MAGNETOSTRICTIVE TORQUE SENSOR**

(30) Priority: 24.03.2023 JP 2023047527
(71) Applicant: NSK LTD., Tokyo 141-8560 (JP)
(72) Inventor: URAKAMI Seigou, Takasaki-shi, Gunma 370-3344 (JP); FUJII Yusuke, Fujisawa-shi, Kanagawa 251-8501 (JP); TAKEUCHI Koji, Fujisawa-shi, Kanagawa 251-8501 (JP)
(74) Representative: Müller-Boré & Partner Patentanwälte PartG mbB
(86) International application number: PCT/JP2024/005424
(87) International publication number: WO 2024/202664

(57) **Abstract**

Bonding strength between a bobbin and a magnetic ring is sufficiently ensured regardless of temperature changes while favorably ensuring coaxiality between the bobbin and the magnetic ring. A magnetostrictive torque sensor 1 includes: a bobbin 3 having a bobbin-side cylindrical portion 7 arranged around a rotating shaft 2, a cylindrical bobbin-side fitting surface 8, and a bobbin-side locking hole 9; a detection portion 4 having detection coils arranged on an outer periphery of the bobbin-side cylindrical portion 7; a magnetic ring 5 having a ring-side cylindrical portion 13 arranged around the detection portion 4, a ring-side fitting surface 14 fitted to the bobbin-side fitting surface 8, and a ring-side locking hole 15; and a positioning member 6 bridged between the bobbin-side locking hole 9 and the ring-side locking hole 15.

## Description

### TECHNICAL FIELD

The present disclosure relates to a magnetostrictive torque sensor that measures torque applied to a rotating shaft.

### BACKGROUND ART

A magnetostrictive torque sensor that measures torque applied to a rotating shaft using a reverse magnetostrictive effect generated in the rotating shaft when torque is applied is disclosed in JP 2020-085814A and has been conventionally known.

The torque sensor described in JP 2020-085814A comprises a detection portion having a bobbin made of resin and a plurality of detection coils formed by winding insulated wires around the bobbin, and a magnetic ring made of a ferromagnetic material and arranged so as to cover the detection coils of the detection portion in order to suppress magnetic flux leakage to the outside, the detection portion and the magnetic ring joined by injection-molding an epoxy resin so as to cover the detection portion and the magnetic ring.

### CITATION LIST

### PATENT LITERATURE

Patent Literature 1: JP 2020-085814A

### SUMMARY OF INVENTION

### TECHNICAL PROBLEM

In a magnetostrictive torque sensor, a magnetic circuit is formed so as to pass through a rotating shaft, a bobbin of a detection portion with detection coils arranged on an outer periphery thereof, and a magnetic ring. Therefore, it is necessary to favorably ensure coaxiality between the rotating shaft, the bobbin, and the magnetic ring. Further, it is necessary that the bobbin and the magnetic ring are connected and fixed to each other so as to be incapable of relative displacement in the axial direction and the circumferential direction regardless of temperature changes.

The torque sensor described in JP 2020-085814A has room for improvement in terms of sufficiently ensuring bonding strength between the bobbin and the magnetic ring.

That is, a resin material of the bobbin has a large difference in coefficient of linear expansion from a metal material of the magnetic ring. For this reason, as the temperature changes, adhesion between the bobbin and the magnetic ring may decrease, and relative slipping (creep), that is, relative rotation and/or relative displacement in the axial direction, may occur between the bobbin and the magnetic ring.

The bobbin and the magnetic ring may be bonded using an adhesive. However, even in this case, the problem of decreased adhesion between the bobbin and the magnetic ring due to temperature changes occurs.

In contrast, it is also conceivable to ensure bonding strength in the axial direction between the bobbin and the magnetic ring by snap-fitting, in which a bobbin having a claw portion and a magnetic ring having a locking concave portion are combined in a state where the bobbin is elastically deformed, and then the bobbin is elastically restored so that the claw portion is locked into the locking concave portion. However, in this case, the following problems occur.

In order to favorably ensure coaxiality between the bobbin and the magnetic ring, it is necessary to fit them together without looseness in the radial direction by a spigot fitting or the like. That is, a diameter (inner diameter or outer diameter) of a fitting portion of the bobbin relative to the magnetic ring and a diameter (outer diameter or inner diameter) of the magnetic ring relative to the bobbin are required to be approximately the same. For this reason, even if the bobbin is elastically deformed when combining the bobbin and the magnetic ring, the claw portion interferes, making it impossible to fit the bobbin and the magnetic ring together.

An object according to the present disclosure is to achieve a structure of a magnetostrictive torque sensor that is capable of sufficiently ensuring bonding strength between a bobbin and a magnetic ring regardless of temperature changes, while well ensuring coaxiality between the bobbin and the magnetic ring.

### SOLUTION TO PROBLEM

A magnetostrictive torque sensor of an aspect of the present disclosure is a sensor that measures torque applied to a rotating shaft having a magnetostrictive property, and includes a bobbin, a detection portion, a magnetic ring, and a positioning member.

The bobbin has a bobbin-side cylindrical portion arranged around the rotating shaft, a cylindrical bobbin-side fitting surface, and a bobbin-side locking hole.

The detection portion has detection coils arranged on an outer periphery of the bobbin-side cylindrical portion.

The magnetic ring has a ring-side cylindrical portion arranged around the detection portion, a ring-side fitting surface fitted to the bobbin-side fitting surface, and a ring-side locking hole.

The positioning member is bridged between the bobbin-side locking hole and the ring-side locking hole.

In the magnetostrictive torque sensor of an aspect of the present disclosure, the bobbin-side fitting surface and the ring-side fitting surface can be fitted together without looseness in the radial direction. More preferably, the bobbin-side fitting surface and the ring-side fitting surface can be fitted by a spigot fitting, which is a clearance fit without looseness in the radial direction.

In the magnetostrictive torque sensor of an aspect of the present disclosure, the bobbin-side locking hole can penetrate the bobbin in the radial direction, and the positioning member can protrude in the radial direction from an opening on a side opposite to the magnetic ring in the radial direction, among openings on both sides in the radial direction of the bobbin-side locking hole.

The magnetostrictive torque sensor of an aspect of the present disclosure can include a plurality of combinations of the bobbin-side locking hole, the ring-side locking hole, and the positioning member. Alternatively, the magnetostrictive torque sensor of an aspect of the present disclosure can include one combination of the bobbin-side locking hole, the ring-side locking hole, and the positioning member.

In the magnetostrictive torque sensor of an aspect of the present disclosure, the positioning member can be composed of a spring pin. Alternatively, the positioning member can be composed of a columnar or cylindrical pin, a screw, or the like.

In the magnetostrictive torque sensor of an aspect of the present disclosure, the bobbin-side fitting surface can be provided on an inner circumferential surface of the bobbin, and the ring-side fitting surface can be provided on an outer circumferential surface of the magnetic ring.

In this case, the bobbin can have a connecting plate portion that extends from an end portion on a first side in the axial direction of the bobbin-side cylindrical portion toward the outside in the radial direction, and an outer diameter-side cylindrical portion that extends from an end portion on the outside in the radial direction of the connecting plate portion toward a second side in the axial direction. An inner circumferential surface of the bobbin is composed of an inner circumferential surface of the outer diameter-side cylindrical portion. The bobbin-side locking hole penetrates the outer diameter-side cylindrical portion in the radial direction. Further, the ring-side fitting surface is provided at an end portion on the first side in the axial direction of the outer circumferential surface of the magnetic ring. The ring-side locking hole opens to the ring-side fitting surface.

The present disclosure can be implemented by appropriately combining the respective aspects described above, as long as no contradiction occurs.

### EFFECT OF INVENTION

With the magnetostrictive torque sensor of an aspect of the present disclosure, it is possible to sufficiently ensure bonding strength between a bobbin and a magnetic ring regardless of temperature changes, while favorably ensuring coaxiality between the bobbin and the magnetic ring.

### BRIEF DESCRIPTION OF DRAWINGS

[FIG. 1] FIG. 1 is a perspective view illustrating a magnetostrictive torque sensor of a first example of an embodiment of the present disclosure.
[FIG. 2] FIG. 2 is a cross-sectional view illustrating the magnetostrictive torque sensor of the first example.
[FIG. 3] FIG. 3 is an exploded perspective view illustrating the magnetostrictive torque sensor of the first example with a detection portion omitted.
[FIG. 4] FIG. 4 is a schematic cross-sectional view illustrating an example of the detection portion.
[FIG. 5] FIG. 5A and FIG. 5B are developed views of another example of the detection portion when viewed from an outside in a radial direction of detection coils. FIG. 5A illustrates a first detection coil and a fourth detection coil, and FIG. 5B illustrates a second detection coil and a third detection coil.
[FIG. 6] FIG. 6 is a view illustrating a detection circuit configured to include four detection coils.
[FIG. 7] FIG. 7 is a perspective view illustrating a magnetostrictive torque sensor of a second example of an embodiment of the present disclosure.
[FIG. 8] FIG. 8 is an enlarged cross-sectional view of a main portion of the magnetostrictive torque sensor of the second example.
[FIG. 9] FIG. 9 is a view for explaining a method of preventing rotation of the magnetostrictive torque sensor of the second example relative to a housing.
[FIG. 10] FIG. 10 is a perspective view illustrating a magnetostrictive torque sensor of a third example of an embodiment of the present disclosure.
[FIG. 11] FIG. 11 is a view for explaining a method of preventing rotation of the magnetostrictive torque sensor of the third example relative to a housing.

### DESCRIPTION OF EMBODIMENTS

### [First Example]

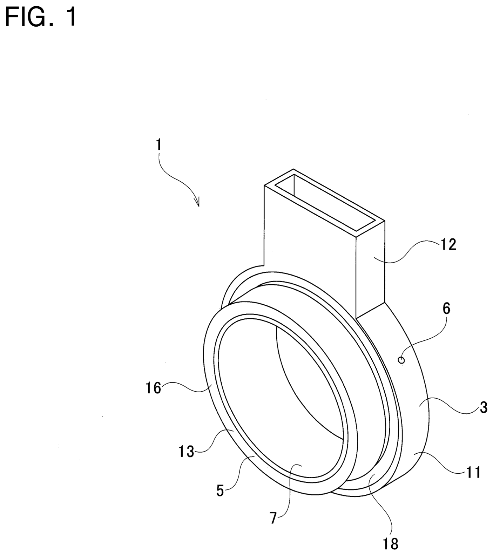

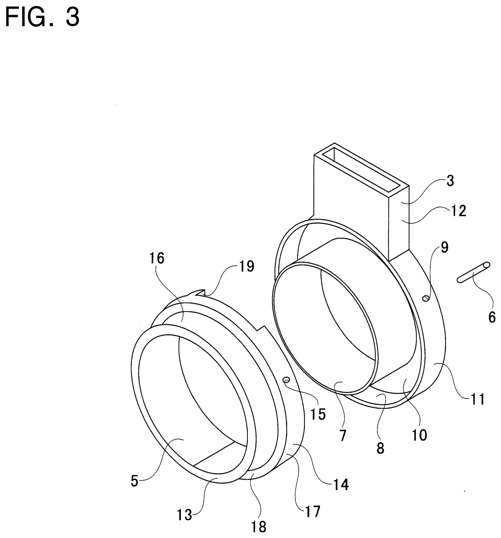

A first example of an embodiment of the present disclosure will be described with reference to FIG. 1 to FIG. 3.

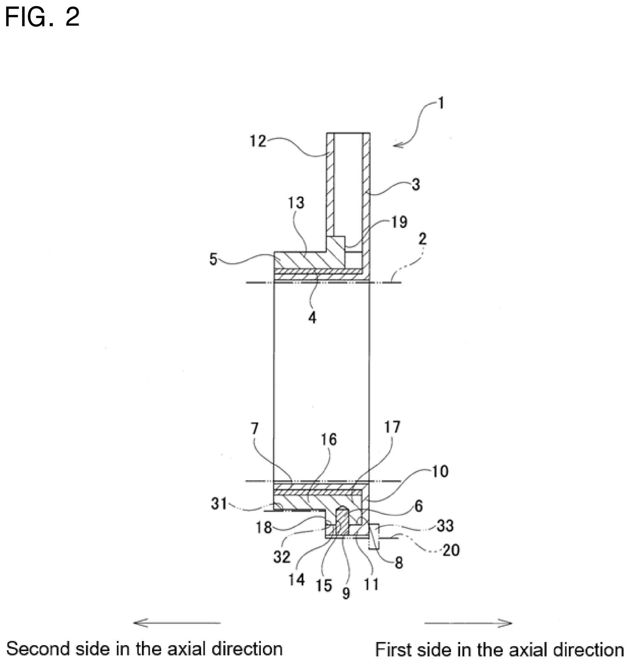

The magnetostrictive torque sensor 1 of the present example is a sensor that measures torque applied to a rotating shaft 2 (see FIG. 2) having magnetostrictive properties, and includes a bobbin 3, a detection portion 4, a magnetic ring 5, and a positioning member 6.

In the following description, unless otherwise specified, the axial direction, radial direction, and circumferential direction of the magnetostrictive torque sensor 1 refer to the axial direction, radial direction, and circumferential direction of the rotating shaft 2. The axial direction, radial direction, and circumferential direction of the rotating shaft 2 coincide with the axial direction, radial direction, and circumferential direction of the bobbin 3, the detection portion 4, and the magnetic ring 5.

The bobbin 3 has a bobbin-side cylindrical portion 7 arranged around the rotating shaft 2, a cylindrical bobbin-side fitting surface 8, and a bobbin-side locking hole 9.

The bobbin 3 is made of synthetic resin which is a material having non-magnetic and non-conductive (insulating) properties. In the present example, the bobbin 3 is integrally formed as a single body by injection molding of synthetic resin. However, in a case of implementing the magnetostrictive torque sensor of an aspect of the present disclosure, the bobbin 3 may also be formed by combining a plurality of parts.

The bobbin-side cylindrical portion 7 has a portion on its periphery, specifically on its outer circumferential surface or inner circumferential surface, where detection coils 28 of the detection portion 4 are arranged. The bobbin-side cylindrical portion 7 has a cylindrical shape. That is, the bobbin-side cylindrical portion 7 has an inner circumferential surface with an inner diameter that does not change in the axial direction and an outer circumferential surface with an outer diameter that does not change in the axial direction. Further, the bobbin-side cylindrical portion 7 is arranged coaxially with the rotating shaft 2 in a state where the magnetostrictive torque sensor 1 is supported and fixed to a non-rotating member 20. In this state, a peripheral surface of the bobbin-side cylindrical portion 7 and a peripheral surface of the rotating shaft 2 face each other. In the present example, in a state where the magnetostrictive torque sensor 1 is supported and fixed to the non-rotating member 20, the inner circumferential surface of the bobbin-side cylindrical portion 7 and the outer circumferential surface of the rotating shaft 2 face close to each other with a small gap therebetween.

The bobbin-side fitting surface 8 is provided on a peripheral surface of any portion of the bobbin 3. Specifically, the bobbin-side fitting surface 8 is provided on the bobbin-side cylindrical portion 7 or on a cylindrical portion provided separately from the bobbin-side cylindrical portion 7, for example, but not limited to, on an outer diameter-side cylindrical portion 11 provided on the outer diameter side, or on an inner diameter-side cylindrical portion provided on the inner diameter side, either over the entire surface or partially. In this case, the bobbin-side fitting surface 8 is preferably composed of a single cylindrical surface whose diameter does not change in the axial direction.

The bobbin-side locking hole 9 is provided in any portion of the bobbin 3. In combination with the positioning member 6 and a ring-side locking hole 15 of the magnetic ring 5, the bobbin-side locking hole 9 has a function of preventing relative displacement (creep) between the bobbin 3 and the magnetic ring 5, particularly relative displacement in the axial direction. The arrangement of the bobbin-side locking hole 9 is not particularly limited and can be appropriately set at any position of the bobbin 3 depending on ease of assembly or the like. The bobbin-side locking hole 9 may be formed in any direction including the radial direction or axial direction of the bobbin 3, as long as the function can be achieved; however, it is preferably formed in the radial direction of the bobbin 3.

The bobbin-side locking hole 9 may be formed as either a through hole or a bottomed hole in relation to the ring-side locking hole 15, as long as the positioning member 6 can be arranged (inserted) inside the bobbin-side locking hole 9 and the ring-side locking hole 15. The opening shape of the bobbin-side locking hole 9 can be set arbitrarily according to the shape of the positioning member.

Although not limited to the following configuration, in the present example, the bobbin 3 includes a connecting plate portion 10 that extends toward the outside in the radial direction from an end portion on a first side in the axial direction (the right side in FIG. 2) of the bobbin-side cylindrical portion 7, and an outer diameter-side cylindrical portion 11 that extends from an end portion on the outside in the radial direction of the connecting plate portion 10 toward a second side in the axial direction. The bobbin-side fitting surface 8 is composed of the entire inner circumferential surface of the outer diameter-side cylindrical portion 11. The bobbin-side locking hole 9 penetrates the outer diameter-side cylindrical portion 11 in the radial direction.

The connecting plate portion 10 has a hollow circular end surface shape when viewed from the axial direction. That is, the connecting plate portion 10 extends over the entire circumference from the end portion on the first side in the axial direction of the bobbin-side cylindrical portion 7 toward the outside in the radial direction. The end portion on the outside in the radial direction of the connecting plate portion 10 is connected to an end portion on the first side in the axial direction of the outer diameter-side cylindrical portion 11. In other words, the connecting plate portion 10 connects the end portion on the first side in the axial direction of the bobbin-side cylindrical portion 7 and the end portion on the first side in the axial direction of the outer diameter-side cylindrical portion 11 in the radial direction.

In the present example, since the bobbin 3 includes a connector housing portion 12, the outer diameter-side cylindrical portion 11 is provided in a portion of the bobbin 3 excluding the portion where the connector accommodating portion 12 is provided, and extends from the end portion on the outside in the radial direction of the connecting plate portion 10 toward the second side in the axial direction (the left side in FIG. 2). That is, in the present example, the outer diameter-side cylindrical portion 11 has a partially cylindrical shape as a whole. However, in a structure in which the connector housing portion 12 is not provided, the outer diameter-side cylindrical portion 11 extends from the entirety of the end portion on the outside in the radial direction of the connecting plate portion 10 toward the second side in the axial direction. The outer diameter-side cylindrical portion 11 is arranged so as to be coaxial with the bobbin-side cylindrical portion 7 and the bobbin-side fitting surface 8.

In the present example, the outer diameter-side cylindrical portion 11 has a length in the axial direction that is shorter than a length in the axial direction of the bobbin-side cylindrical portion 7. Therefore, a portion on the second side in the axial direction of the bobbin-side cylindrical portion 7 protrudes further toward the second side in the axial direction than an end portion on the second side in the axial direction of the outer diameter-side cylindrical portion 11.

The length in the axial direction of the outer diameter-side cylindrical portion 11 is not particularly limited, however, it may be three times or more, and preferably four times or more, the diameter of the bobbin-side locking hole 9. In the illustrated example, the length in the axial direction of the outer diameter-side cylindrical portion 11 is approximately three times the diameter of the bobbin-side locking hole 9.

In the present example, the bobbin-side fitting surface 8 is provided on the inner circumferential surface of the outer diameter-side cylindrical portion 11. The bobbin-side fitting surface 8 is provided over the entire inner circumferential surface of the outer diameter-side cylindrical portion 11.

In the present example, the bobbin-side locking hole 9 penetrates the outer diameter-side cylindrical portion 11 in the radial direction. The bobbin-side locking hole 9 opens to both the bobbin-side fitting surface 8 provided on the inner circumferential surface of the outer diameter-side cylindrical portion 11 and the outer circumferential surface of the outer diameter-side cylindrical portion 11. In the present example, the bobbin-side locking hole 9 is formed as a circular hole having a circular opening shape.

In the present example, the bobbin-side locking hole 9 is provided at any position in the circumferential direction of the outer diameter-side cylindrical portion 11. Particularly, since the bobbin 3 includes the connector housing portion 12, the bobbin-side locking hole 9 is provided at a position slightly offset in the circumferential direction from a portion of the outer diameter-side cylindrical portion 11 where an end portion on the inside in the radial direction of the connector housing portion 12 is connected, specifically, at a position offset by approximately 45 degrees from a central position in the circumferential direction of the connector housing portion 12.

In the present example, the bobbin 3 further includes the connector housing portion 12. The connector housing portion 12 houses a connector for electrically connecting a cable extending from a detection circuit located outside the magnetostrictive torque sensor 1 to the detection portion 4.

In the present example, the connector housing portion 12 has a rectangular tubular shape that extends in the radial direction of the bobbin 3. An end portion on the inside in the radial direction of the connector housing portion 12 opens into the bobbin-side fitting surface 8 provided on the inner circumferential surface of the outer diameter-side cylindrical portion 11.

In a case of implementing a magnetostrictive torque sensor of an aspect of the present disclosure, the shape of the connector housing portion can be appropriately changed depending on the shape of the connector housed therein. Alternatively, the connector housing portion may be omitted.

The detection portion 4 has a detection coil 28 arranged around the bobbin-side cylindrical portion 7. In the present example, the detection coil 28 is arranged on the outer circumferential surface of the bobbin-side cylindrical portion 7. The detection portion 4 changes an output signal in accordance with the magnitude and direction of torque applied to the rotating shaft 2. The output signal of the detection portion 4 is transmitted to the detection circuit through a connector and a cable housed in the connector housing portion 12.

The configuration of the detection coil, such as its shape, number, and arrangement, is not particularly limited.

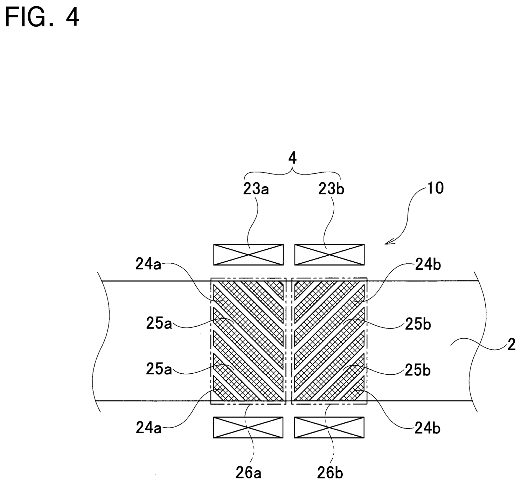

For example, as in the example illustrated in FIG. 4, the detection portion 4 can be formed by arranging two detection coils 23a, 23b, each of which is formed by winding an insulated wire around the bobbin 3 in a circular or spiral shape, side by side in the axial direction.

In this case, two magnetic variation portions 26a, 26b are provided on the outer circumferential surface of the rotating shaft 2, each formed by alternately arranging a plurality of magnetic portions 24a, 24b having magnetic anisotropy and non-magnetic portions 25a, 25b having no magnetic anisotropy. Of the two magnetic variation portions 26a, 26b, the magnetic portions 24a and non-magnetic portions 25a of a first magnetic variation portion 26a extend in a direction inclined at a predetermined angle (for example, +45 degrees) with respect to the axial direction of the rotating shaft 2. In contrast, the magnetic portions 24b and non-magnetic portions 25b of a second magnetic variation portion 26b extend in a direction inclined at a predetermined angle (for example, -45 degrees) opposite to the inclination direction of the magnetic portions 24a and non-magnetic portions 25a of the first magnetic variation portion 26a with respect to the axial direction of the rotating shaft 2.

Of the two detection coils 23a, 23b, a first detection coil 23a is arranged around the first magnetic variation portion 26a, and a second detection coil 23b is arranged around the second magnetic variation portion 26b.

When torque is applied to the rotating shaft 2, strain occurs in the magnetic portions 24a, 24b provided on the outer circumferential surface of the rotating shaft 2, causing tensile stress to act on the magnetic portions 24a (or 24b), and compressive stress to act on the magnetic portion 24b (or 24a). Magnetic permeability increases in portions where the tensile stress acts, whereas the magnetic permeability decreases in portions where the compressive stress acts. Then, the detection circuit obtains a difference in voltage (induced electromotive force) between the detection coils 23a, 23b, and obtains the direction and magnitude of the torque applied to the rotating shaft 2 based on this difference.

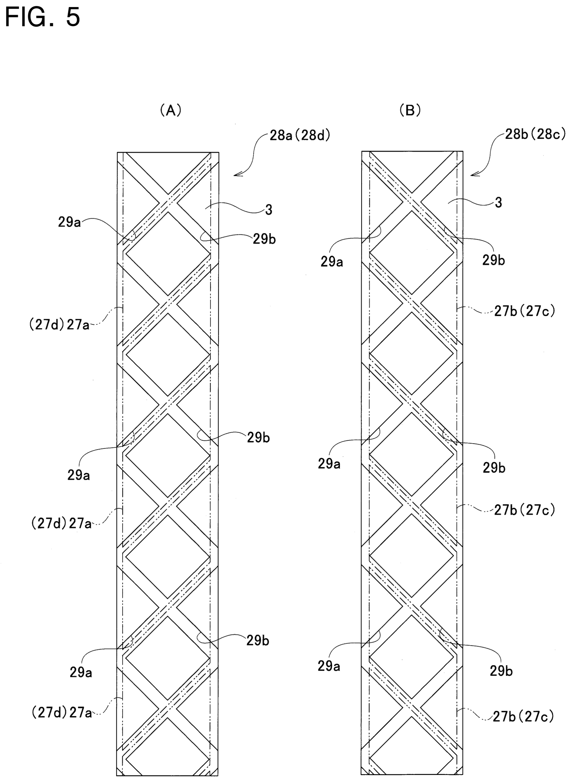

Alternatively, as in another example illustrated in FIG. 5A and FIG. 5B, the detection portion 4 may also be formed by layering four detection coils 28a to 28d in the radial direction, each formed by arranging a plurality of parallelogram-shaped coil pieces 27a to 27d over the entire circumference when viewed from the radial direction.

Each of the detection coils 28a to 28d is formed by winding an insulated wire around the bobbin 3. On the outer circumferential surface of the bobbin 3, first inclined grooves 29a inclined at a predetermined angle (for example, +45 degrees) with respect to the axial direction of the bobbin 3 and second inclined grooves 29b inclined at a predetermined angle (for example, -45 degrees) in a direction opposite to the first inclined grooves 29a with respect to the axial direction of the bobbin 3 are provided. Of the four detection coils 28a to 28d, the coil pieces 27a of a first detection coil 28a and the coil pieces 27d of a fourth detection coil 28d are formed by winding insulated wire along the first inclined grooves 29a. In contrast, the coil pieces 27b of a second detection coil 28b and the coil pieces 27c of a third detection coil 28c are formed by winding insulated wire along the second inclined grooves 29b.

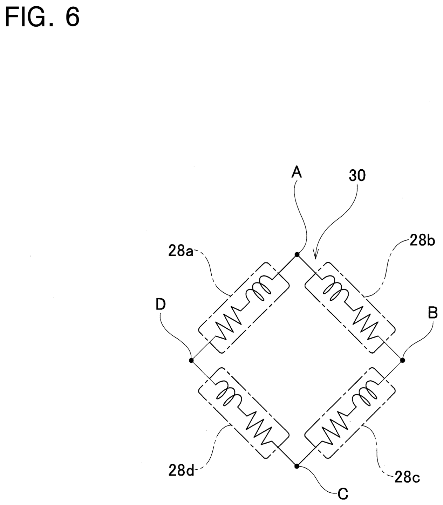

As illustrated in FIG. 6, each of the detection coils 28a to 28d is connected in an annular shape to form a detection circuit 30. In order to measure the torque applied to the rotating shaft 2, an AC voltage is applied between a contact point A between the first detection coil 28a and the second detection coil 28b, and a contact point C between the third detection coil 28c and the fourth detection coil 28d. Then, a voltage between a contact point B between the second detection coil 28b and the third detection coil 28c, and a contact point D between the first detection coil 28a and the fourth detection coil 28d is detected. Based on these voltages, the direction and magnitude of the torque transmitted by the rotating shaft 2 are obtained.

In a case where the detection portion 4 is formed by layering the four detection coils 28a to 28d in the radial direction, the rotating shaft 2 is formed into a columnar or cylindrical shape using an iron-based alloy having magnetostrictive properties. A modified layer with improved magnetostrictive properties may also be formed by performing shot peening treatment on a portion of the outer circumferential surface of the rotating shaft 2 located on the inside in the radial direction of the detection portion 4.

In a case of implementing a magnetostrictive torque sensor of an aspect of the present disclosure, the detection portion is not limited to the two examples described above, and any configuration can be adopted as long as it is capable of detecting changes in magnetic field existing around the rotating shaft as torque is applied to the rotating shaft.

The detection coils of the detection portion 4 are not limited to coils formed by winding insulated wires around the bobbin 3, and may also be formed by patterns printed on flexible printed circuits (FPC).

The magnetic ring 5, also referred to as a back yoke, has a function of suppressing magnetic flux generated by the detection coils 28 of the detection portion 4 from leaking to the outside. The magnetic ring 5 has a ring-side cylindrical portion 13 that is arranged around the detection portion 4, a ring-side fitting surface 14 that fits with the bobbin-side fitting surface 8, and a ring-side locking hole 15.

The magnetic ring 5 is made of a magnetic material and is integrally formed as a single body. As the magnetic material of the magnetic ring 5, for example, an iron-based alloy such as alloy steel for machine structures or stainless steel can be used.

In the present example, the magnetic ring 5 is formed only by the ring-side cylindrical portion 13, and is formed into a substantially cylindrical shape as a whole. As long as the overall shape of the ring-side cylindrical portion 13 is substantially cylindrical, it may be any shape. For example, the outer diameter and the inner diameter of the ring-side cylindrical portion 13 may be constant in the axial direction, or at least one of the outer diameter and the inner diameter may be formed by a stepped cylindrical surface.

In the present example, the ring-side cylindrical portion 13 has a small diameter portion 16 at a portion on the second side in the axial direction (excluding an end portion on the first side in the axial direction), and has a large diameter portion 17, which has an outer diameter larger than the small diameter portion 16, at the end portion on the first side in the axial direction. That is, the ring-side cylindrical portion 13 has a stepped cylindrical outer circumferential surface which is formed by connecting the outer circumferential surface of the small diameter portion 16 and the outer circumferential surface of the large diameter portion 17 with a stepped surface 18 facing the second side in the axial direction. In contrast, the inner circumferential surface of the small diameter portion 16 and the inner circumferential surface of the large diameter portion 17 are located on the same cylindrical surface. Therefore, the thickness in the radial direction of the large diameter portion 17 is larger than the thickness in the radial direction of the small diameter portion 16.

Further, the ring-side cylindrical portion 13 has a notch 19 at a location in the circumferential direction of an end portion on the first side in the axial direction of the large diameter portion 17. The notch 19 penetrates the large diameter portion 17 from the inner circumferential surface to the outer circumferential surface and opens in an end surface on the first side in the axial direction of the large diameter portion 17. The notch 19 is arranged at a position whose phase in the circumferential direction coincides with the connector housing portion 12 in an assembled state of the magnetostrictive torque sensor 1. A cable extending from the detection portion 4 and/or a connector provided at a tip end portion of the cable is arranged inside the notch 19.

The ring-side fitting surface 14 is provided on a circumferential surface of any portion of the magnetic ring 5. Specifically, the ring-side fitting surface 14 is provided on an entirety or part of the ring-side cylindrical portion 13 or a cylindrical portion provided separately from the ring-side cylindrical portion 13, for example, but not limited to, an outer diameter-side cylindrical portion provided on the outer diameter side or an inner diameter-side cylindrical portion provided on the inner diameter side. In this case, the ring-side fitting surface 14 is preferably formed by a single cylindrical surface whose diameter does not change in the axial direction.

In the present example, the ring-side fitting surface 14 is provided on the outer circumferential surface of the large diameter portion 17, more specifically, on the entire outer circumferential surface thereof.

The fitting state between the bobbin-side fitting surface 8 and the ring-side fitting surface 14 may be arbitrary, and any of clearance fit, interference fit, or transition fit may be adopted. However, from the aspect of favorably ensuring coaxiality between the bobbin 3 and the magnetic ring 5, it is preferable that the bobbin-side fitting surface 8 and the ring-side fitting surface 14 are fitted with each other without looseness in the radial direction. In this case, spigot fitting or press fitting (including light press fitting) may be adopted. From this aspect, the dimension in the radial direction of the ring-side fitting surface 14 is determined in relation to the dimension in the radial direction of the bobbin-side fitting surface 8.

In the present example, the ring-side fitting surface 14 has an outer diameter dimension slightly smaller than the inner diameter dimension of the bobbin-side fitting surface 8. Therefore, in an assembled state of the magnetostrictive torque sensor 1, the bobbin-side fitting surface 8 and the ring-side fitting surface 14 are fitted with each other by spigot fitting, which is a clearance fit without looseness in the radial direction.

The relationship between the length in the axial direction of the bobbin-side fitting surface 8 and the length in the axial direction of the ring-side fitting surface 14 is arbitrary, and these lengths may be the same or different. In the present example, the length in the axial direction of the bobbin-side fitting surface 8 and the length in the axial direction of the ring-side fitting surface 14 are substantially the same. In other words, the length in the axial direction of the outer diameter-side cylindrical portion 11 and the length in the axial direction of the large diameter portion 17 are substantially the same. Therefore, in an assembled state of the magnetostrictive torque sensor 1, the position in the axial direction of the stepped surface 18 and the position in the axial direction of the end surface on the second side in the axial direction of the outer diameter side cylindrical portion 11 are substantially the same. That is, the stepped surface 18 and the end surface on the second side in the axial direction of the outer diameter-side cylindrical portion 11 are located on substantially the same plane.

The ring-side locking hole 15 is provided in any portion of the magnetic ring 5. The ring-side locking hole 15 has a function of preventing relative displacement (creep) between the bobbin 3 and the magnetic ring 5, particularly relative displacement in the axial direction, in combination with the positioning member 6 and the bobbin-side locking hole 9 of the bobbin 3. The arrangement of the bobbin-side locking hole 9 is not particularly limited, but it is provided at a portion that aligns with the bobbin-side locking hole 9 in an assembled state of the magnetostrictive torque sensor 1. The orientation of the ring-side locking hole 15 is determined in relation to the orientation of the bobbin-side locking hole 9, and may be formed in any direction including the radial direction or the axial direction of the magnetic ring 5, however, it is preferable that the ring-side locking hole is formed in the radial direction of the magnetic ring 5 in accordance with forming the bobbin-side locking hole 9 in the radial direction. In this case, the ring-side locking hole 15 is provided at a portion that aligns with the bobbin-side locking hole 9 in an assembled state of the magnetostrictive torque sensor 1, that is, at a portion where the position in the axial direction and the phase in the circumferential direction coincide.

The ring-side locking hole 15 may be configured as either a through hole or a bottomed hole in relation to the bobbin-side locking hole 9, as long as the positioning member 6 can be arranged (inserted) inside both the bobbin-side locking hole 9 and the ring-side locking hole 15. Further, the opening shape of the ring-side locking hole 15 can be arbitrarily set in accordance with the shape of the positioning member.

In the present example, the ring-side locking hole 15 is provided in the large diameter portion 17. The ring-side locking hole 15 opens to the ring-side fitting surface 14 provided on the outer circumferential surface of the large diameter portion 17. In this example, alternatively, the ring-side locking hole may also be formed so as to penetrate the magnetic ring in the radial direction. In the present example, the ring-side locking hole 15 has a circular opening shape and is formed as a bottomed hole that opens only to the outside in the radial direction.

The positioning member 6 has a function of preventing relative displacement between the bobbin 3 and the magnetic ring 5 by being bridged between the bobbin-side locking hole 9 of the bobbin 3 and the ring-side locking hole 15 of the magnetic ring 5.

The material of the positioning member 6 is not particularly limited as long as it can sufficiently ensure the bonding strength between the bobbin 3 and the magnetic ring 5, and in addition to metal materials such as iron-based alloys and light alloys, synthetic resins or the like can be used.

The structure of the positioning member 6 is not particularly limited as long as the function thereof can be achieved. For example, the positioning member 6 may be composed of a partially cylindrical shaped spring pin having a straight or wavy slit at one location in the circumferential direction, or by a columnar shaped or cylindrical pin. In these cases, a cross-sectional shape of the positioning member 6 is not limited to a circular shape and may also be a non-circular shape such as a partially circular shape or a polygonal shape. It is preferable that the opening shapes of the bobbin-side locking hole 9 provided in the bobbin 3 and the ring-side locking hole 15 provided in the magnetic ring 5 are determined in accordance with the cross-sectional shape of the positioning member 6.

Alternatively, the positioning member 6 may be formed of a screw. In this case, either the bobbin-side locking hole 9 or the ring-side locking hole 15 is a screw hole. In this case, even when the bobbin-side locking hole 9, the ring-side locking hole 15, and the positioning member 6 are arranged in the axial direction of the magnetostrictive torque sensor 1, it is possible to reliably prevent relative displacement between the bobbin 3 and the magnetic ring 5 in the axial direction and in the circumferential direction.

Even when the bobbin 3 and/or the magnetic ring 5 thermally expands during use of the magnetostrictive torque sensor 1, the positioning member 6 has a length sufficient to maintain the state of being bridged between the bobbin-side locking hole 9 and the ring-side locking hole 15. The positioning member 6 may have a length such that the entire member thereof is arranged inside the bobbin-side locking hole 9 and the ring-side locking hole 15. Alternatively, as long as the function of the magnetostrictive torque sensor 1 is not hindered, the positioning member 6 may be allowed to protrude in the radial direction from at least one of the openings of the bobbin-side locking hole 9 and the ring-side locking hole 15.

In the present example, a portion on the outside in the radial direction of the positioning member 6 is arranged (inserted) inside the bobbin-side locking hole 9, and a portion on the inside in the radial direction of the positioning member 6 is arranged (inserted) inside the ring-side locking hole 15.

In the present example, the positioning member 6 is composed of a partially cylindrical shaped spring pin having a straight or wavy slit at one location in the circumferential direction. The positioning member 6 is inserted into the bobbin-side locking hole 9 and the ring-side locking hole 15 in a state in which the outer diameter thereof is reduced by elastically narrowing the width of the slit, and is then elastically restored. As a result, the positioning member 6 is press-fitted into at least one of the bobbin-side locking hole 9 and the ring-side locking hole 15, and is bridged between the bobbin-side locking hole 9 and the ring-side locking hole 15.

In the present example, an end portion on the outside in the radial direction of the positioning member 6 does not protrude toward outside in the radial direction from an end portion on the outside in the radial direction of the bobbin-side locking hole 9. The positioning member 6 is made of metal materials such as an iron-based alloy or a light alloy.

In the magnetostrictive torque sensor 1, a function of preventing relative displacement (creep), particularly relative displacement in the axial direction between the bobbin 3 and the magnetic ring 5, is achieved through the combination of the bobbin-side locking hole 9, the ring-side locking hole 15, and the positioning member 6. The number of combinations of the bobbin-side locking hole 9, the ring-side locking hole 15, and the positioning member 6 can be set arbitrarily depending on the application and installation location of the magnetostrictive torque sensor 1. That is, the magnetostrictive torque sensor 1 may include one combination of the bobbin-side locking hole 9, the ring-side locking hole 15, and the positioning member 6. Alternatively, the magnetostrictive torque sensor 1 may include a plurality of combinations of the bobbin-side locking hole 9, the ring-side locking hole 15, and the positioning member 6.

In the present example, only one combination of the positioning member 6, the bobbin-side locking hole 9, and the ring-side locking hole 15 is provided. Accordingly, the magnetostrictive torque sensor 1 of the present example includes only one positioning member 6.

In the magnetostrictive torque sensor 1, the outer circumferential surface of the small diameter portion 16 configuring the ring-side cylindrical portion 13 of the magnetic ring 5 is fitted without looseness in the radial direction into a fixed-side fitting surface 31 provided on an inner circumferential surface of a non-rotating member 20 (see FIG. 2), such as a housing or a frame, which does not rotate during use. In addition, side surfaces on both sides in the circumferential direction of the connector housing portion 12 are faced to a stopper surface provided on the non-rotating member 20, thereby preventing rotation of the magnetostrictive torque sensor 1 relative to the non-rotating member 20.

Further, the magnetostrictive torque sensor 1 is positioned in the axial direction by abutting a fixed-side stepped surface 32 provided on the non-rotating member 20 and facing the first side in the axial direction, against a stepped surface 18 of the magnetic ring 5 and an end surface on the second side in the axial direction of the outer diameter-side cylindrical portion 11, and by abutting a retaining member 33 such as a retaining ring, which is locked to the inner circumferential surface of the non-rotating member 20, against a side surface on the first side in the axial direction of the connection plate portion 10.

In this manner, the magnetostrictive torque sensor 1 is arranged around the rotating shaft 2 in a state where the magnetostrictive torque sensor 1 is supported and fixed to the non-rotating member 20. In other words, the magnetostrictive torque sensor 1 is supported and fixed to the non-rotating member 20 in a state where the rotating shaft 2 is inserted into the inside of the bobbin-side cylindrical portion 7. The method for supporting and fixing the magnetostrictive torque sensor to a non-rotating member that does not rotate during use is not limited to the method described above and may be performed by any method.

In a state where the magnetostrictive torque sensor 1 of the present example is supported and fixed to the non-rotating member 20, a part of the non-rotating member 20 may be brought into contact with or placed to be close to a peripheral portion of an opening on the outside in the radial direction of the bobbin-side locking hole 9 on the outer circumferential surface of the bobbin 3, so as to cover the opening on the outside in the radial direction of the bobbin-side locking hole 9 provided in the bobbin 3. As a result, the positioning member 6 is reliably prevented from coming off from the bobbin-side locking hole 9 and the ring-side locking hole 15.

When torque is applied to the rotating shaft 2 and the rotating shaft 2 is elastically twisted and deformed, the magnetic permeability of the rotating shaft 2 changes due to the inverse magnetostrictive effect. As a result, the magnetic field existing around the rotating shaft 2 changes, and a voltage (induced electromotive force) of the detection coils of the detection portion 4 changes. Based on such a change in voltage, the torque applied to the rotating shaft 2 is obtained by a detection circuit.

In the magnetostrictive torque sensor 1 of this example, the bobbin-side fitting surface 8 provided on the bobbin 3 and the ring-side mating surface 14 provided on the magnetic ring 5 are fitted without looseness. Therefore, the coaxiality of the bobbin 3 and the magnetic ring 5 can be favorably ensured, and a magnetic circuit passing through the rotating shaft 2, the bobbin 3, and the magnetic ring 5 can be stably formed.

In the magnetostrictive torque sensor 1 of the present example, the positioning member 6 is bridged between the bobbin-side locking hole 9 provided in the bobbin 3 and the ring-side locking hole 15 provided in the magnetic ring 5. Therefore, even when the bobbin 3 and/or the magnetic ring 5 expands or contracts due to a temperature change, it is possible to reliably prevent relative displacement between the bobbin 3 and the magnetic ring 5 in both the axial direction and the circumferential direction. That is, with the magnetostrictive torque sensor 1 of the present example, it is possible to sufficiently ensure bonding strength between the bobbin 3 and the magnetic ring 5, specifically, bonding strength in the axial direction and the circumferential direction.

In the magnetostrictive torque sensor 1 of the present example, the bobbin-side fitting surface 8 is provided on the inner circumferential surface of the bobbin 3, and the ring-side fitting surface 14 is provided on the outer circumferential surface of the magnetic ring 5. That is, in the magnetostrictive torque sensor 1 of the present example, the bobbin-side fitting surface 8 facing inward in the radial direction and the ring-side fitting surface 14 facing outward in the radial direction are fitted together without looseness, and the positioning member 6 is inserted into the bobbin-side locking hole 9 of the bobbin 3 and the ring-side locking hole 15 of the magnetic ring 5 from the outside in the radial direction. By adopting such a configuration, the bobbin-side locking hole 9 can be formed in the outer diameter-side cylindrical portion 11 instead of the bobbin-side cylindrical portion 7, and therefore the roundness of the bobbin-side cylindrical portion 7, in which the detection coils 28 of the detection portion 4 are arranged on the periphery (in the present example, on the outer periphery), and in which the circumferential surface (in the present example, the inner circumferential surface) faces the circumferential surface (in the present example, the outer circumferential surface) of the rotating shaft 2, is more suitably ensured.

In a case of implementing the magnetostrictive torque sensor of an aspect of the present disclosure, alternatively, the bobbin-side fitting surface may be provided on the outer circumferential surface of the bobbin, and the ring-side fitting surface may be provided on the inner circumferential surface of the magnetic ring. That is, the bobbin-side fitting surface facing outward in the radial direction and the ring-side fitting surface facing inward in the radial direction may be fitted (preferably without looseness), and the positioning member may be inserted from the outside in the radial direction into the bobbin-side locking hole that is provided in the bobbin and opens to bobbin-side fitting surface and the ring-side locking hole that is provided in the magnetic ring and penetrates the magnetic ring in the radial direction.

More specifically, both the bobbin-side cylindrical portion of the bobbin and the ring-side cylindrical portion of the magnetic ring are formed into substantially cylindrical as a whole, and a protruding portion (a bobbin-side protruding portion or a ring-side protruding portion) that protrudes from an end portion on the first side in the axial direction of at least one of the bobbin-side cylindrical portion and the ring-side cylindrical portion toward one or both of the outside or inside in the radial direction is provided. In this case, the bobbin-side fitting surface is formed by an outer circumferential surface of the end portion on the first side in the axial direction of the bobbin-side cylindrical portion or an outer circumferential surface of the bobbin-side protruding portion, and the ring-side fitting surface is formed by an inner circumferential surface of the end portion on the first side in the axial direction of the ring-side cylindrical portion or an inner circumferential surface of the ring-side protruding portion.

### [Second Example]

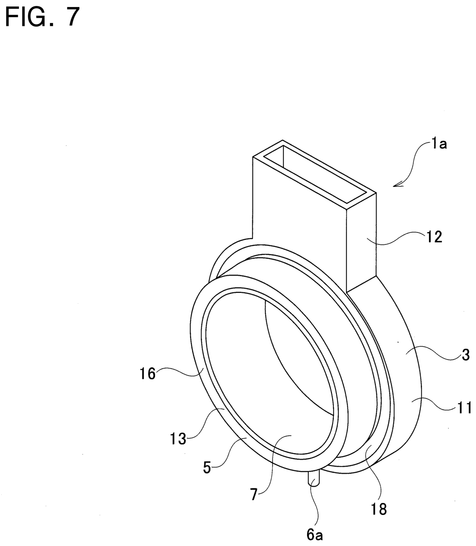

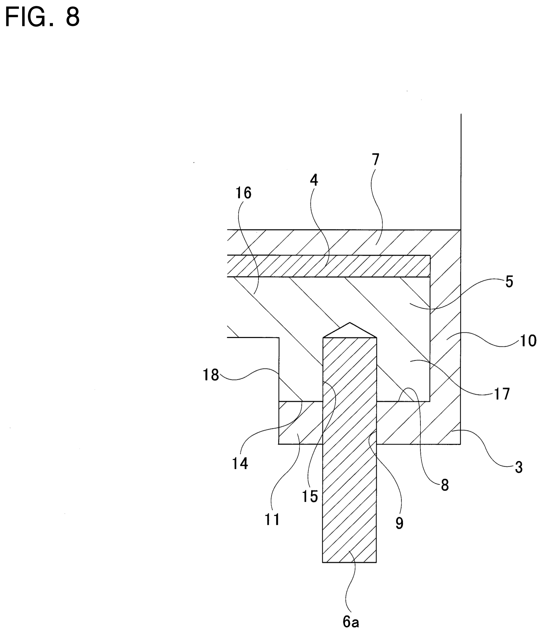

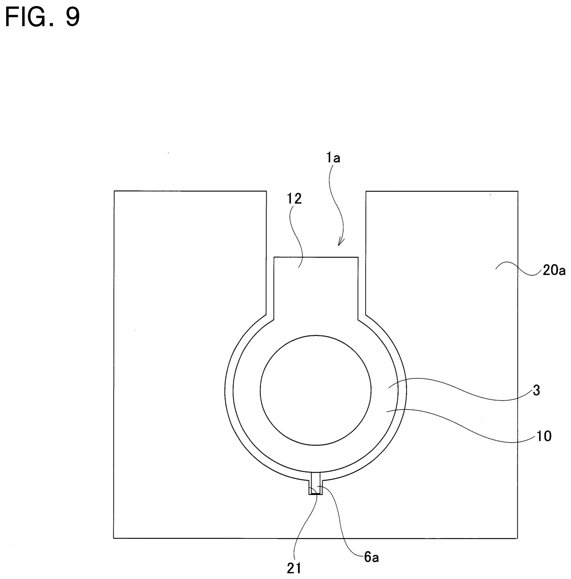

A second example of an embodiment of the present disclosure will be described with reference to FIG. 7 to FIG. 9.

A magnetostrictive torque sensor 1a of the present example differs from the structure of the first example in that the bobbin-side locking hole 9 penetrates the bobbin 3 in the radial direction, and the positioning member 6a protrudes in the radial direction from an opening on the side opposite to the magnetic ring 5, among the openings on both sides in the radial direction of the bobbin-side locking hole 9.

Specifically, in the magnetostrictive torque sensor 1a of the present example, the positioning member 6a is made of a metallic material. Further, the length of the positioning member 6a is set longer than the sum of the depth in the radial direction of the bobbin-side locking hole 9 provided in the bobbin 3 and the depth in the radial direction of the ring-side locking hole 15 provided in the magnetic ring 5. As a result, an end portion on the outside in the radial direction of the positioning member 6a protrudes toward outside in the radial direction from the opening on the outside in the radial direction of the bobbin-side locking hole 9 provided in the bobbin 3.

In the present example, in a state where the magnetostrictive torque sensor 1a is supported and fixed to a non-rotating member 20a, a portion on the outside in the radial direction of the positioning member 6a, which protrudes from the opening on the outside in the radial direction of the bobbin-side locking hole 9, is arranged inside an engaging concave portion 21 provided on the inner circumferential surface of the non-rotating member 20a. The portion on the outside in the radial direction of the positioning member 6a is arranged between side surfaces of the inner surface of the engagement recess 21 that face each other in the circumferential direction. That is, the portion on the outside in the radial direction of the positioning member 6a is closely opposed to the side surfaces provided on the non-rotating member 20a and facing in the circumferential direction. As a result, rotation of the magnetostrictive torque sensor 1a relative to the non-rotating member 20a is prevented.

With the magnetostrictive torque sensor 1a of the present example, the connector housing portion 12 provided in the bobbin 3 can be more easily reduced in size or omitted.

In order to prevent rotation of the magnetostrictive torque sensor 1 of the first example relative to the non-rotating member 20, it is considered to face the side surfaces on both sides in the circumferential direction of the connector housing portion 12 provided in the bobbin 3 to a stopper surface provided on the non-rotating member 20. However, since the bobbin 3 is made of a synthetic resin, fretting wear is likely to occur between side surfaces in the circumferential direction of the connector housing portion 12 and the stopper surface due to vibrations during use or the like, making it difficult to reduce the size of the connector housing portion 12.

In contrast, in the present example, rotation of the magnetostrictive torque sensor 1a relative to the non-rotating member 20a is prevented by arranging a portion on the outside in the radial direction of the positioning member 6a inside the engaging concave portion 21 provided on the inner circumferential surface of the non-rotating member 20a. Accordingly, the connector housing portion 12 can be more easily reduced in size or omitted.

As an alternative example of the second example, in a structure in which the bobbin-side fitting surface is provided on the outer circumferential surface of the bobbin and the ring-side fitting surface is provided on the inner circumferential surface of the magnetic ring, the ring-side locking hole penetrates the magnetic ring in the radial direction, the bobbin-side fitting surface facing toward the outside in the radial direction and the ring-side fitting surface facing toward the inside in the radial direction are fitted together, and the positioning member protrudes in the radial direction from an opening on the side opposite to the bobbin, among the openings on both sides in the radial direction of the ring-side locking hole.

The configuration and operational effects of other parts of the second example are the same as those of the first example.

### [Third Example]

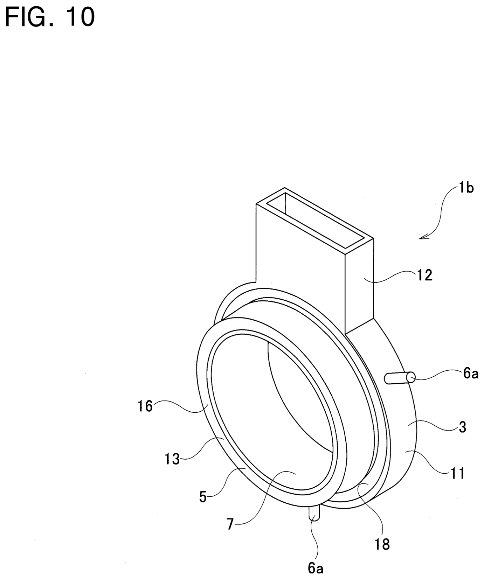

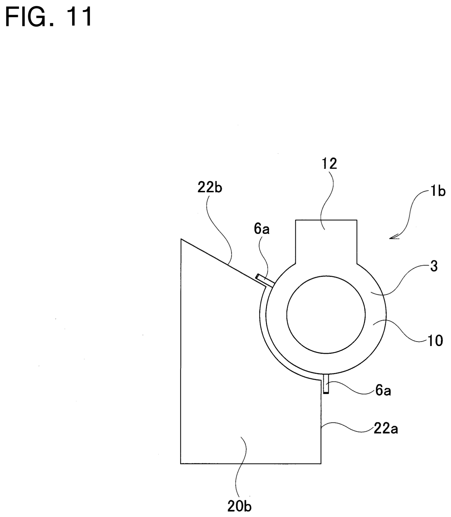

A third example of an embodiment of the present disclosure will be described with reference to FIG. 10 and FIG. 11.

The magnetostrictive torque sensor 1b of the present example differs from the structures of the first and second examples in that it includes a plurality of the bobbin-side locking holes, the ring-side locking holes, and the positioning members.

Specifically, the magnetostrictive torque sensor 1b of the present example includes two combinations of a bobbin-side locking hole provided in the bobbin 3, a ring-side locking hole provided in the magnetic ring 5, and a positioning member 6a.

In the present example, similar to the structure of the second example, a portion on the outside in the radial direction of each positioning member 6a protrudes toward outside in the radial direction from an opening on the outside in the radial direction of the bobbin-side locking hole provided in the bobbin 3.

In the present example, in a state where the magnetostrictive torque sensor 1b is supported and fixed to the non-rotating member 20b, a portion on the outside in the radial direction of one of the positioning members 6a is positioned to face a stopper surface 22a provided on the non-rotating member 20b and facing a first side in the circumferential direction, and a portion on the outside in the radial direction of the other positioning member 6a is positioned to face a stopper surface 22b provided on the non-rotating member 20b and facing a second side in the circumferential direction. As a result, rotation of the magnetostrictive torque sensor 1b relative to the non-rotating member 20b is prevented.

The configuration and operational effects of other parts of the third example are the same as those of the first and second examples.

### REFERENCE SIGNS LIST

1, 1a, 1b Magnetostrictive torque sensor
2 Rotating shaft
3 Bobbin
4 Detection portion
5 Magnetic ring
6, 6a Positioning member
7 Bobbin-side cylindrical portion
8 Bobbin-side fitting surface
9 Bobbin-side locking hole
10 Connecting plate portion
11 Outer diameter-side cylindrical portion
12 Connector housing portion
13 Ring-side cylindrical portion
14 Ring-side fitting surface
15 Ring-side locking hole
16 Small diameter portion
17 Large diameter portion
18 Stepped surface
19 Notch
20, 20a, 20b Non-rotating member
21 Engaging concave portion
22a, 22b Stopper surface
23a First detection coil
23b Second detection coil
24a, 24b Magnetic portions
25a, 25b Non-magnetic anisotropy
26a First magnetic variation portions
26b Second magnetic variation portions
27a, 27b, 27c, 27d Coil pieces
28 Detection coil
28a First detection coil
28b Second detection coil
28c Third detection coil
28d Fourth detection coil
29a First inclined grooves
29b Second inclined grooves
30 Detection circuit
31 Fixed-side fitting surface
32 Fixed-side stepped surface
33 Retaining member

## Claims

1. A magnetostrictive torque sensor for measuring torque applied to a rotating shaft having a magnetostrictive property, the magnetostrictive torque sensor comprising:
a bobbin having a bobbin-side cylindrical portion arranged around the rotating shaft, a cylindrical bobbin-side fitting surface, and a bobbin-side locking hole,
a detection portion having detection coils arranged on an outer periphery of the bobbin-side cylindrical portion,
a magnetic ring having a ring-side cylindrical portion arranged around the detection portion, a ring-side fitting surface fitted to the bobbin-side fitting surface, and a ring-side locking hole, and
a positioning member bridged between the bobbin-side locking hole and the ring-side locking hole.

2. The magnetostrictive torque sensor according to claim 1, wherein the bobbin-side fitting surface and the ring-side fitting surface are fitted together without looseness in the radial direction.

3. The magnetostrictive torque sensor according to claim 1 or 2, wherein
the bobbin-side locking hole penetrates the bobbin in the radial direction, and
the positioning member protrudes in the radial direction from an opening on a side opposite to the magnetic ring in the radial direction, among openings on both sides in the radial direction of the bobbin-side locking hole.

4. The magnetostrictive torque sensor according to any one of claims 1 to 3, comprising a plurality of the bobbin-side locking holes, the ring-side locking holes, and the positioning members.

5. The magnetostrictive torque sensor according to any one of claims 1 to 4, wherein the positioning member is composed of a spring pin.

6. The magnetostrictive torque sensor according to any one of claims 1 to 5, wherein the bobbin-side fitting surface is provided on an inner circumferential surface of the bobbin, and the ring-side fitting surface is provided on an outer circumferential surface of the magnetic ring.

7. The magnetostrictive torque sensor according to claim 6, wherein
the bobbin has a connection plate portion that extends toward outside in the radial direction from an end portion on a first side in the axial direction of the bobbin-side cylindrical portion, and an outer diameter-side cylindrical portion that extends toward a second side in the axial direction from an end portion on the outside in the radial direction of the connection plate portion,
the inner circumferential surface of the bobbin is composed of an inner circumferential surface of the outer diameter-side cylindrical portion,
the bobbin-side locking hole penetrates the outer diameter-side cylindrical portion in the radial direction,
the ring-side fitting surface is provided at an end portion on the first side in the axial direction of the outer circumferential surface of the magnetic ring, and
the ring-side locking hole opens to the ring-side fitting surface.
